# EUROPÄISCHE PATENTANMELDUNG

(11) **EP 2 009 535 A1**
(43) Veröffentlichungstag der Anmeldung: **31.12.2008**
(21) Anmeldenummer: 08102187.5
(22) Anmeldetag: 31.01.2006
(51) Int. Cl.: G05D 16/10, B67D 1/04

(54) **Druckminder- und Regulierventil mit Anstechmechanismus einer im Faßverschluß montierbaren Gaspatrone**

(62) Teilanmeldung aus: 06101083.1
(71) Anmelder: Impress GmbH & Co. oHG, 38723 Seesen (DE); Fass-Frisch GmbH, 75056 Sulzfeld (DE)
(72) Erfinder: Sauer, Hans Peter, 56218 Muelheim-Kärlich (DE); Neukirch, Werner, 56626 Andernach (DE); Grittman, Guenther, 75031 Eppingen - Muehlbach (DE)
(74) Vertreter: Leonhard, Frank Reimund

(57) **Zusammenfassung**

Die Erfindung betrifft eine Ventileinheit für ein System zum Zapfen eines Getränks aus einem Flüssigkeitsgebinde, die mit einer in einem Patronenschutzgehäuse befindlichen Druckgaspatrone zur Erhöhung des Drucks im Inneren des Flüssigkeitsgebindes zusammenwirkt, wobei die Ventileinheit folgendes umfasst:
(a) eine Anstechspitze,
(b) ein Dichtungsventil,
(c) einen Druckregulierraum sowie
(d) einen durch das Dichtungsventil gegen den Druckregulierraum abdichtbaren Druckraum, in den nach dem Anstechen der Druckgaspatrone aus der Patrone austretendes Gas vordringt,
(e) ein Rückschlagventil, das verhindert, dass Flüssigkeit aus dem Hauptraum des Gebindes in den Druckregulierraum eindringt,

wobei die Ventileinheit derart ausgebildet ist, dass ihre Aktivierung gleichzeitig folgendes bewirken kann:
(i) das Anstechen der Druckgaspatrone und
(ii) die Ausbalancierung des Drucks zwischen dem Druckraum und dem

Druckregulierraum mit Hilfe eines Federsystems derart, dass im Innern der Ventileinheit ein Druck von ca. 1,0 bis 1,5 bar eingestellt wird.

## Beschreibung

Die vorliegende Erfindung betrifft ein als Einwegteil vorgesehenes Druckminder- und Regulierventil, das eine Anstechspitze aufweist. Das Ventil wirkt im Gebrauch mit einer Druckgaspatrone, z.B. einer Kohlendioxid-Patrone zusammen, um den Gasdruck in einem Behälter, beispielsweise in einem Flüssigkeitsgebinde wie einem größeren oder kleineren Bierfass, aufrecht zu erhalten, derart, dass unabhängig von der noch im Behälter befindlichen Flüssigkeit ein Gasdruck vorhanden ist, der zum einen ausreicht, um Getränk auch bei relativ wenig Restflüssigkeit im Behälter zu zapfen und der zum anderen das zu zapfende Getränk frisch hält. Die Aufrechterhaltung eines solchen Gasdruckes ermöglicht es darüber hinaus, die Zapfarmatur in beliebiger Höhe anzuordnen. Zusätzlich kann dieses Ventil eine oder mehrere weitere Einheiten umfassen: Mindestens eine Sicherheitsventileinheit kann vorgesehen sein, um bei einem fehlerhaft auf zu hohe Werte angestiegenen Überdruck im Ventil Gas ins Freie zu entlassen. Eine Rückschlagventileinheit kann verhindern, dass der in der Dose herrschende Druck und mit diesem Flüssigkeit in den Ventilbereich gelangt. Selbstverständlich kann das erfindungsgemäße Ventil auch für andere Verwendungszwecke eingesetzt werden.

Bier wird heute unter anderem in kleinen Metallfässchen von z.B. 5 I Fassungsvermögen angeboten. Diese Fässchen besitzen in einem unteren Bereich der Seitenwand einen integrierten Zapfhahn, der vor dem ersten Gebrauch in das Gebinde eingeschoben ist. Im Deckel befindet sich ein Belüftungsventil, das in der Regel im Füllloch der Dose sitzt.

Wenn das Bier in einem solche Fässchen zur Neige geht, beginnt es, schal zu werden, da der Druck im Gebinde abfällt. Um dem entgegenzuwirken, ist bereits ein Belüftungsventil entwickelt worden, auf das sich bei Bedarf eine Anstech- und Zapfarmatur mit Kohlensäurepatrone aufsetzen lässt. Ein solches Ventil ist z.B. in der DE 199 52 473 beschrieben.

Die bis heute bekannten Kohlensäure-Anstech- und -Zapfgeräte sind Mehrweggeräte. Die Zapfarmatur wird mittels Spannbügel auf dem Faß festgeklemmt, und die außensitzende Gaspatrone, eine CO₂-Patrone, wird mit Hilfe des Patronenhalters angestochen. Die Patrone wird dabei zur Anstechspitze des Ventils beweg. Nach jeder Benutzung muss das Gerät aufwendig gereinigt werden. Es ist außerdem groß und kostenintensiv, so dass sich eine Person, die nur gelegentlich einmal ein Bierfässchen in der genannten Größe anstechen möchte, genau überlegen wird, ob sich der Kauf lohnt.

Die vorliegende Erfindung will hier Abhilfe schaffen und eine Ventileinheit für ein Zapfsystem bereitstellen, mit der einerseits der Druck innerhalb des Gebindes auch bei niedrigem Füllstand an Getränk auf einem Niveau gehalten werden kann, der das Zapfen von frisch schmeckendem, kohlensäurereichem Bier oder dergleichen gewährleistet, die aber andererseits wenig Raum außerhalb des Gebindes einnimmt.

Diese Aufgabe löst die vorliegende Erfindung, indem sie eine Ventileinheit gemäß Anspruch 1, insbesondere in den Ausgestaltungen der Ansprüche 2 bis 5 und 6 bis 8, bereitstellt. Zusätzliche Elemente der Ventileinheit können gemäß den Ansprüchen 9 bis 17 vorgesehen sein.

Die erfindungsgemäße Ventileinheit eignet sich in Kombination mit einer Druckquelle, z.B. einer Kohlendioxid-Patrone, als Einwegteil für insbesondere kleinere Gebinde mit kohlensäurehaltigen Getränken oder dgl. und hier ganz besonders für Bier. Erfindungsgemäß wird ein Ventil mit den folgenden Funktionen bereitgestellt: Es soll in der Lage sein, die Druckquelle für die Aufrechterhaltung des Drucks im Gebinde anzustechen, deren Druck ggf. in geeigneter Weise zu mindern, und den Druck innerhalb des Gebindes zu regulieren. In einer bevorzugten Ausgestaltung der Erfindung soll die Ventileinheit zusätzlich eine Sicherheitsventil-Funktion erfüllen können, falls der Druck in der Ventileinheit, teils auch im Gebinde, zu hoch werden sollte.

Das erfindungsgemäße Ventil kann in Kombination mit einem üblichen Zapfhahn, beispielsweise einem Einmal-Zapfhahn, wie er aus der DE 198 35 569 oder der DE 198 25 929 A1 bekannt ist, insbesondere aber mit einer Anordnung gemäß EP 04 01 4958.5 an einer Dose angebracht werden. Dabei kann es in ein mittiges Spund- oder Einfüllloch der Dose eingesetzt werden; vorzugsweise wird es jedoch exzentrisch in den Stirnseiten-Deckel der Dose eingesetzt, damit der Zapfhahn, der sich gemäß EP 04 01 4958.5 ja relativ weit oben in der Seitenwand des Gebindes befinden kann, nicht durch die mit der Ventileinheit verbundene, nach innen ragende Patronenschutzhülle behindert wird, bzw. umgekehrt. Letzteres ist jedoch nicht zwingend. Der Zapfhahn kann bei Bedarf mit einem Kompensatorsystem ausgestattet sein, mit dem der Zapfdruck gegenüber dem Innendruck reduziert und feinreguliert werden kann.

Erfindungsgemäß ist es in einer ersten Ausgestaltung der Erfindung möglich, dass bereits bei der Montage der Ventileinheit im Deckel und ihrem Zusammenbau mit dem Patronenschutzgehäuse die darin befindliche Gaspatrone angestochen wird. In diesem Falle dringt aus der Patrone austretendes Gas bis in einen Druckraum vor, wobei der sich dabei aufbauende Druck dazu genutzt wird, diesen Raum über ein Ventil (in Form eines Reduzierventils) abzudichten, bis die Ventileinheit betätigt wird. Die Betätigung erfolgt bei Bedarf von außen derart, dass das genannte Dichtungsventil gegen die Kraft, die der Gasdruck ausübt, geöffnet wird, so dass Gas aus dem Druckraum in einen Druckregulierraum eindringen kann. Ein Federsystem sorgt dafür, dass anschließend die Druckverhältnisse in den beiden Räumen derart gegeneinander ausbalanciert sind, dass im Innern der Ventileinheit ein Druck von ca. 1,0 bis 1,5 bar eingestellt ist. Ist dieser Druck erreicht, schließt sich das Reduzierventil wieder. Herrscht im Inneren der Ventileinheit ein höherer Druck als im Innenraum des Flüssigkeitsgebindes, kann Gas aus der Ventileinheit in den Gebinde-Innenraum austreten. Falls jedoch der Druck im Inneren des Flüssigkeitsgebindes höher ist als in der Ventileinheit, verhindert ein Rückschlagventil, dass Flüssigkeit aus dem Hauptraum des Gebindes in den Druckregulier-Raum der Ventileinheit eindringt.

Alternativ kann das Anstechen der Patrone in einer zweiten Ausgestaltung der Erfindung von außen erst zu dem Zeitpunkt bewirkt werden, ab dem eine Kompensation des Druckabfalls im Flüssigkeitsbehälter nötig wird. Eine Aktivierung der Ventileinheit bewirkt dann vorzugsweise gleichzeitig das Anstechen der Patrone und die Einstellung des Dichtungsventils auf die oben erwähnte Druck-Balance. Auch in dieser Ausgestaltung ist es möglich, ein Rückschlagventil vorzusehen. Statt dessen oder zusätzlich kann jedoch vorgesehen sein, dass das Anstechen der Patrone über ein hülsenartiges Innengehäuse erfolgt, dessen Drehbewegung zu einer axialen Bewegung einer mit ihm verbundenen Anstechspitze in Richtung der Mündung der Gaspatrone führt. In diesem Falle kann das Vorhandensein eines drehbaren Innengehäuses im äußeren Gehäuse der Ventileinheit dazu genutzt werden, dass nur dann, wenn die Gaspatrone angestochen wird bzw. wurde, Gas aus dem Druckregulier-Raum austreten kann, beispielsweise, weil nur nach dieser Drehbewegung Öffnungen in der Seitenwand des Innengehäuses und im äußeren Gehäuse der Ventileinheit übereinander zu liegen kommen, so dass Gas in den Innenraum des Gebindes austreten kann.

Die erfindungsgemäße Ventileinheit kann auf beliebige Weise dichtend in einer entsprechenden Öffnung des Flüssigkeitsbehälters befestigt sein. Diese Öffnung findet sich vorzugsweise exzentrisch im Deckelbereich des Flüssigkeitsbehälters. Beispielsweise kann der obere Endbereich des Ventilhalters der Ventileinheit mit einem Belüftungsventilstopfen verbunden sein, der neben der Befestigungs- und Dichtfunktion außerdem Betätigungsmittel dafür besitzt, eine Kraft ins Innere der Ventileinheit zu übertragen, die das Dichtungsventil des Druckraums wie oben erwähnt gegen den Gasdruck öffnet, wenn dieser Belüftungsventilstopfen in Kombination mit der oben erwähnten ersten Ausgestaltung der Erfindung eingesetzt wird. Statt dessen kann er auch mit Mitteln versehen sein, die das Anstechen der Gaspatrone gemäß der erwähnten zweiten Ausgestaltung der Erfindung erst nach der vollständigen Montage und dem Verschließen des Flüssigkeitsbehälters ermöglichen. Der Belüftungsventilstopfen kann Abmessungen und Dichtungsflächen/Rastkrallen derart besitzen, dass er als Abdichtstopfen für die erfindungsgemäße Ventileinheit dient, mit der diese in der Öffnung des Flüssigkeitsbehälters verankert ist. Statt der Verwendung eines Belüftungsventilstopfens kann die Ventileinheit auch direkt mit Hilfe von Dichtmitteln in die Öffnung des Flüssigkeitsbehälters eingesetzt sein.

Es ist in jedem Falle vorteilhaft, wenn die erfindungsgemäße Ventileinheit zumindest ein Sicherheitssystem aufweist, mit dessen Hilfe ein zu hoher Druck im Druckregulier-Raum abgebaut werden und nach außen, in die Umgebung des Flüssigkeitsbehälters, abgegeben werden kann. Dieses System kann im Falle der genannten zweiten Ausgestaltung der Erfindung auch Überdruck im Flüssigkeitsgebinde ableiten. Ist ein Rückschlagventil vorhanden, ist dies jedoch nicht erforderlich. Wünschenswert kann darüber hinaus ein zusätzliches, zweites Sicherheitssystem sein, das bei Dichtungsproblemen in unmittelbarer Nähe der Anstechspitze einen unerwünschten Überdruck aus den dort vorhandenen Räumen heraus- und nach außen leitet.

Anhand der Figuren soll die Erfindung näher erläutert werden, worin:
Figur 1 ein Flüssigkeitsgebinde mit einer ersten Ausgestaltung der erfindungsgemäßen Ventileinheit zeigt, die mit einer in einem Patronenschutzgehäuse 3 befindlichen CO₂-Druckpatrone verbunden ist und exzentrisch im Deckel des Gebindes angebracht ist, so dass ausreichend Platz für die Anordnung eines Zapfhahns mit Steigrohr bleibt,
Figur 2 eine zweite Ausgestaltung der erfindungsgemäßen Ventileinheit in einer Figur 1 ähnlichen Ansicht zeigt,
die Figuren 3 und 4 Übersichten über die verschiedenen Teile der in den Figuren 2 und 1 dargestellten Ausführungsformen der Ventileinheit zeigen, die diese erfindungsgemäß umfassen können, wobei jeweils ein Zustand nach der Montage und dem Verschließen des mit Flüssigkeit gefüllten Gebindes, aber vor der Betätigung der Ventileinheit gezeigt ist;
Figur 5 die Ventileinheit gemäß Figur 1 in aktiviertem Zustand zeigt,
in Figur 6 Einzelheiten der in Figur 2 gezeigten Ausführungsform der erfindungsgemäßen Ventileinheit bezeichnet sind,
und die Figuren 7 und 8 die axiale Bewegung des Innengehäuses und der Anstechspitze der in Figur 2 gezeigten Ausführungsform illustrieren, wobei Figur 7 die Ventileinheit in einer Stellung zeigt, in der die Anstechspitze den Verschluss der Gaspatrone noch nicht durchstoßen hat, sich aber in Axialrichtung bereits ein kleines Stück nach unten bewegt hat, und Figur 8 diese Ventileinheit in arretierter Stellung zeigt, in der die Anstechspitze den Verschluss der Gaspatrone bereits durchstoßen hat.

Gleiche Bezugsziffern sind für die gleichen Elemente aller Figuren und Ausgestaltungen verwendet.

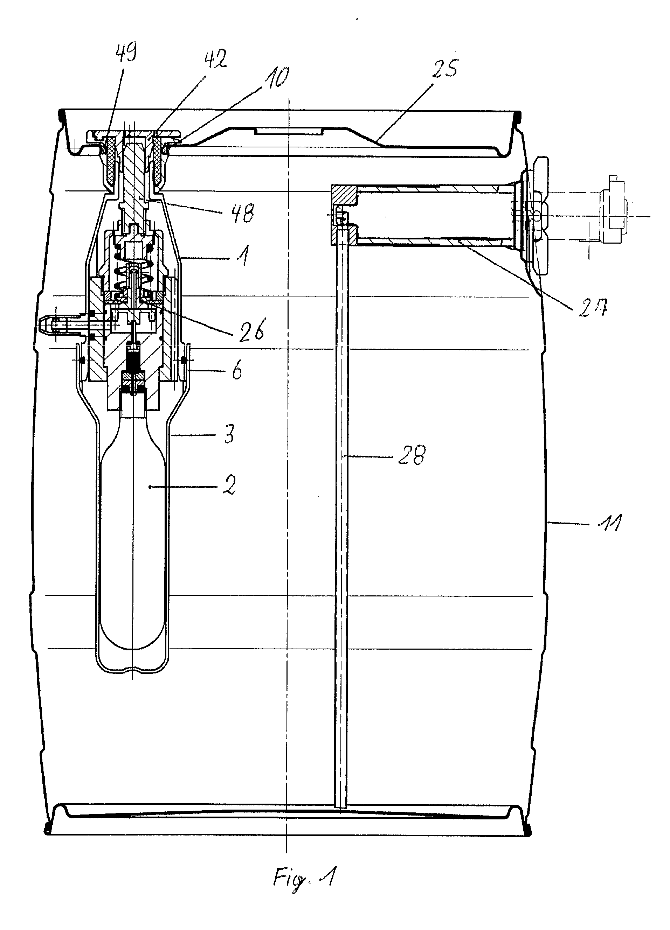

In **Figur 1** erkennt man eine erfindungsgemäße Ventileinheit 26 mit einem Patronen- und Ventilhalter 1, dessen obere Verlängerung mit Einrastkrallen in eine Ausnehmung (einen Außenkäfig) eines Belüftungsventilstopfens eingreift. Der Belüftungsventilstopfen ist in einigen Teilen analog dem Stopfen aufgebaut, der aus der DE-Patentschrift 199 52 473 C2 bekannt ist. So besitzt er seitliche Dichtflächen 49, mit denen er in der exzentrischen Öffnung 10 im Deckel 25 des Getränkebehälters 11 verankert ist, sowie einen Drehdeckel 42 mit Anstechlasche. Der Drehdeckel besitzt eine zentrisch angeordnete Drehdeckelaufnahme, in die eine Anstechschraube 48 eingeschoben ist. Das Belüftungsventil ragt nur wenig über den Deckelspiegel hinaus und ist nicht höher als der Deckelrand, so dass es eine Stapelung von Behältern aufeinander nicht behindert.

Innenseitig des Behälters ist ein Patronenschutzgehäuse 3 am Ventilhalter 1 befestigt, in das eine Patrone 2 eingesetzt werden kann. Aus der Figur 1 ersieht man weiterhin die Anordnung eines Zapfhahns 27 mit Steigrohr 28. Weil mit Hilfe der Ventileinheit immer ein ausreichender Druck im Behälter 11 aufrechterhalten werden kann, ist es nicht erforderlich, dass sich der Zapfhahn in der Nähe des Bodens befindet; statt dessen kann er weit oben angebracht sein, um das Zapfen zu erleichtern, wie in der EP 04 01 4958.5 beschrieben. Die Flüssigkeitszufuhr erfolgt dabei über ein Steigrohr 28.

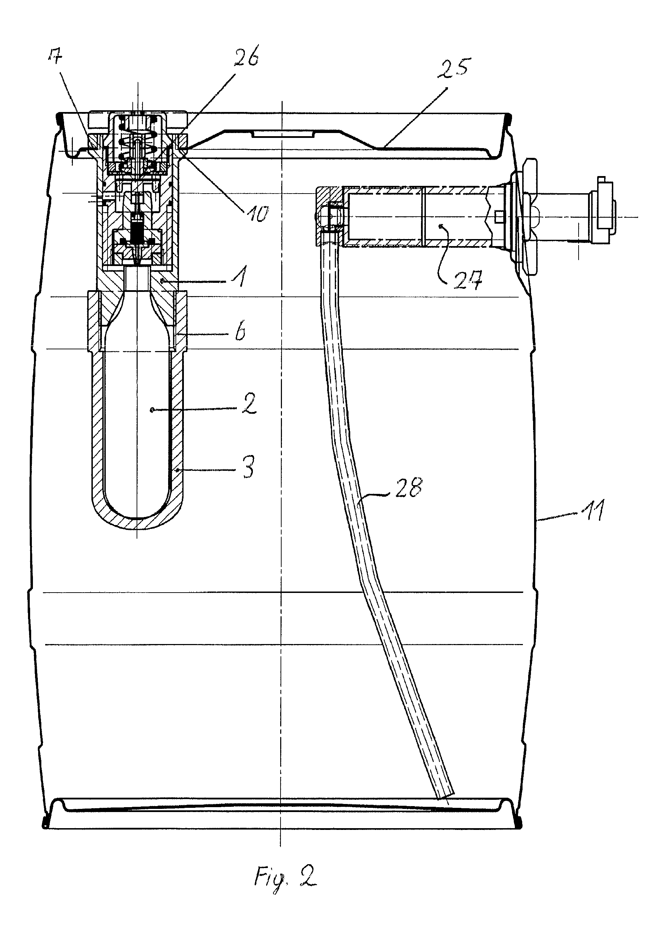

In **Figur 2** ist eine alternative Ventileinheit 26 gezeigt, die ebenfalls in eine runde, exzentrische Öffnung 10 im Deckel 25 des Behälters 11 eingesetzt ist. Auch hier ragt die Ventileinheit nur wenig über den Deckelspiegel hinaus, weil sie mit ihrem äußeren Gehäuse, dem Ventilhalter 1, fest und über ein Dichtungsmittel 7 dichtend in der Öffnung 10 sitzt. Die Arretierung kann auf bekannte Weise erfolgen. Dies kann z.B. mit Hilfe eines Gewinderings sein, der in ein Außengewinde des Patronen- und Ventilhalters 1 eingreift, derart, dass die Wandung des Behälterdeckels zwischen diesem Ring und einem Vorsprung des Patronen- und Ventilhalters 1 festgeklemmt werden kann. Stattdessen kann der Ventilhalter 1 zwei umlaufende Flansche oder Rastkeil-Kränze tragen, zwischen denen sich ein Dichtungsring befindet. Beim Verrasten des Ventilhalters in der dafür vorgesehenen Öffnung des Gebindes kommen die Ränder dieser Öffnung auf der Dichtung zu liegen und werden von den Flanschen oder den Rastkeil-Kränzen gehalten.

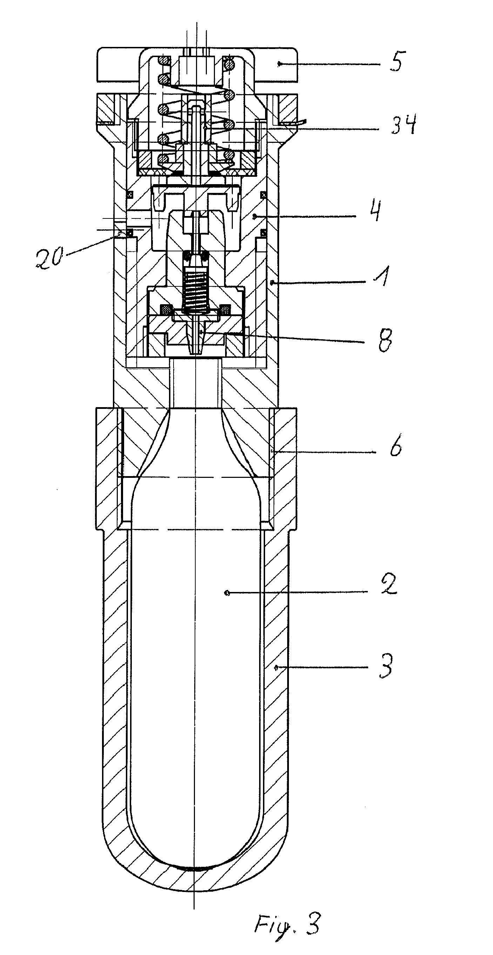

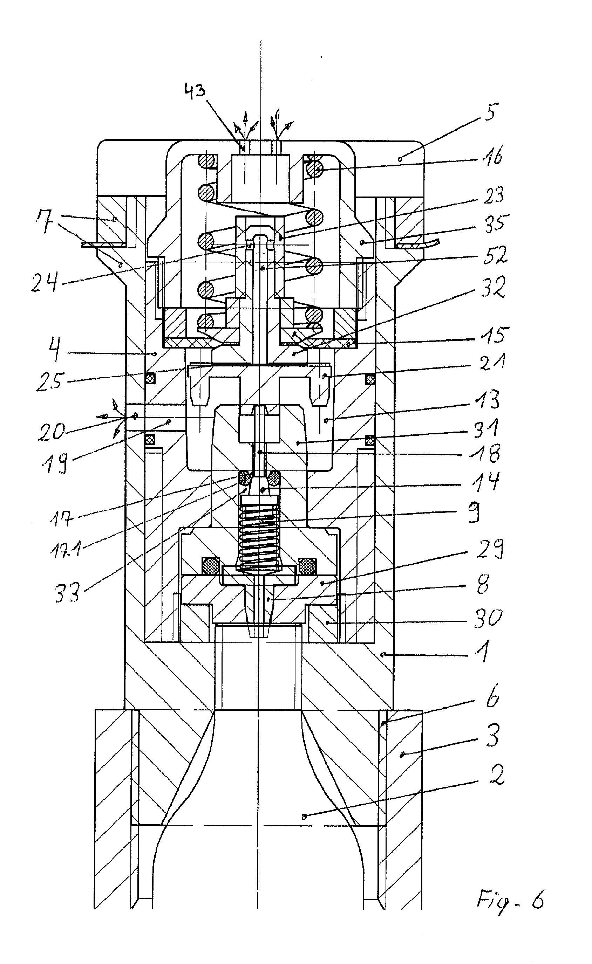

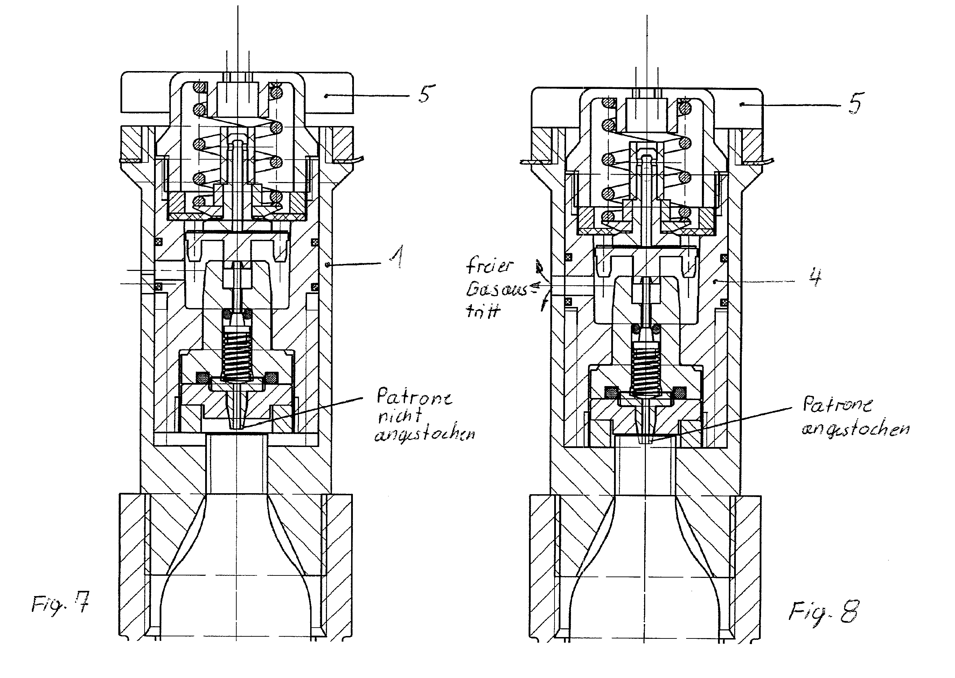

**Figur 3** zeigt die erfindungsgemäße Ventileinheit 26 gemäß Figur 2 in Kombination mit einem Patronenschutzgehäuse 3 mit darin befindlicher Patrone 2 in zusammengebautem Zustand nach Montage im Flüssigkeitsbehälter-Deckel. Der Patronen- und Ventilhalter 1 verfügt über einen Anstechhebel 5 mit Originalitätssicherung, ein Sicherheitsventil 34, ein in einem Innengehäuse 4 befindliches Druckminderventil und eine Anstechspitze 8. Die Anstechspitze befindet sich noch oberhalb der Gaspatronen-Anstichstelle; erst wenn ein Gasaustritt in den Flüssigkeitsbehälter gewünscht wird, um den durch Zapfen von Getränk hervorgerufenen Druckabfall zu kompensieren, wird sie durch Betätigen des Anstechhebels bis in die Anstichstelle abgesenkt, wie in den Erläuterungen zu den Figuren 6 und 7 näher beschrieben.

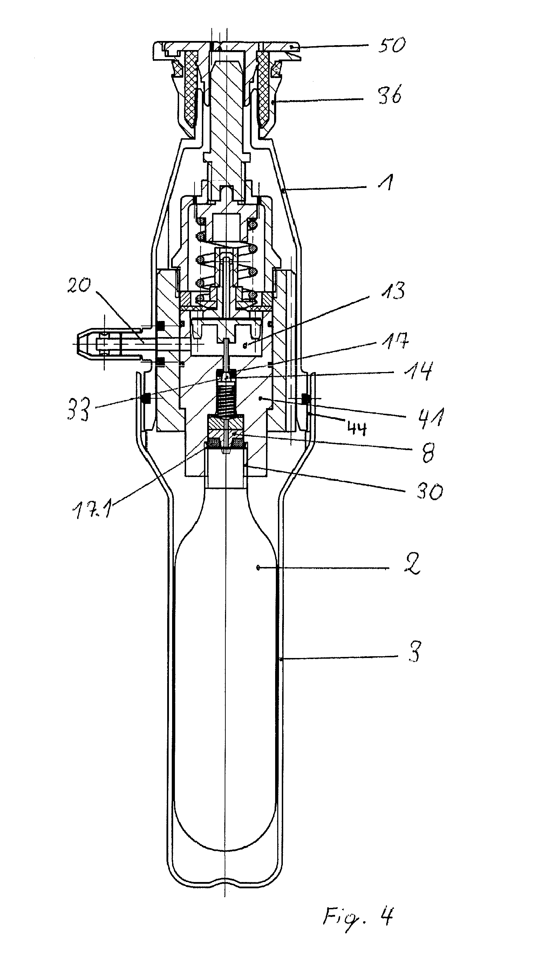

**Figur 4** zeigt die in Figur 1 dargestellte Ventileinheit genauer in allen ihren Hauptbestandteilen. Man erkennt den Ventilhalter 1, der vom Belüftungsventilstopfen 36 umgriffen wird und kraftschlüssig oder über Einrastkrallen 44 mit einem Patronenhalter 3 verbunden ist, in den die Patrone 2 eingesetzt ist. Bei der Montage wird die Gaspatrone 2 mittels Gewinde 30 in den Metallkern 41 eingeschraubt und dabei von der Anstechspitze 8 der Ventileinheit angestochen. Das aus der Gaspatrone austretende Gas gelangt durch einen Kanal in der Anstechspitze in einen Druckraum 33, wird aber durch das Zusammenwirken des Ventilstößelkopfs 14 mit den Dicht- oder Sitzflächen 17 an einem Weiterströmen gehindert. Eine Dichtung 17.1 dichtet das Anstechloch und Anstechspitze gegen den Metallkern 41 und das Gewinde 30.

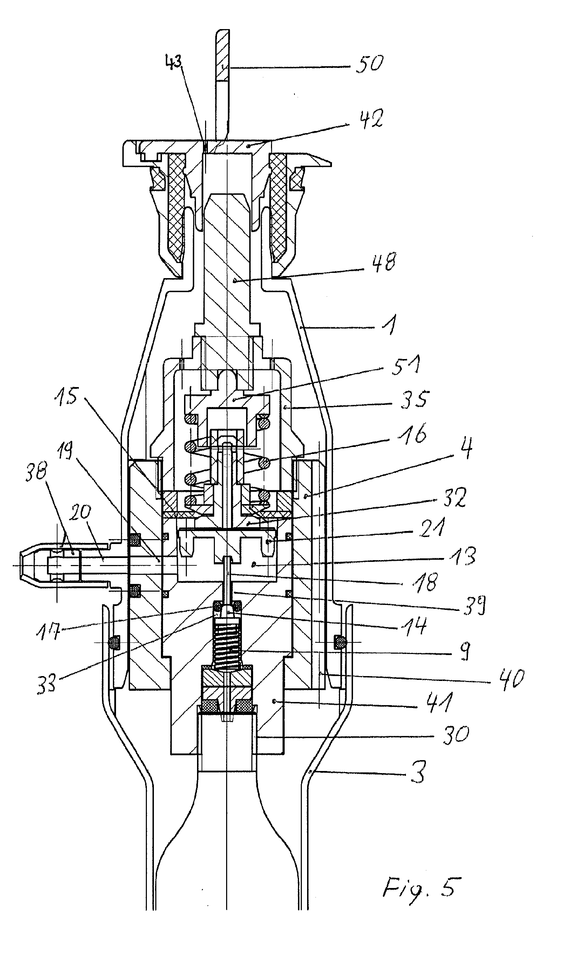

Durch die Betätigung der Anstechlasche 50 gelangt Gas vom Druckraum 33 in den Druckregulier-Raum 13, wie in **Figur 5** im Einzelnen gezeigt ist. Die Anstechlasche 50 wird hierfür angehoben und gedreht; die Anstechschraube 48, die sich in reibschlüssiger Verbindung in einer inneren Ausnehmung des Drehdeckels 42 befindet, wird entsprechend mitgedreht. Ein Schraubgewinde 37, das sich im unteren Bereich der Anstechschraube auf deren Außenseite befindet, steht in Eingriff mit einem entsprechenden Gewindeteil im innenseitigen Halsbereich des Reglerverschlusses 35. Die Drehbewegung der Anstechlasche bewirkt daher gleichzeitig eine Axialbewegung der Anstechschraube 48 in Richtung der Gaspatrone. Das Gewinde kann hierfür beispielsweise eine solche Steigung aufweisen, dass der Drehdeckel 42 ca. 3 Umdrehungen benötigt, bis die Anstechschraube am Reglerverschluss 35 anschlägt. Im Inneren des Reglerverschlusses ist eine Druckfeder (Spiralfeder) 16 angeordnet, die ein Anlageelement 51 gegen die Anstechschraube 48 spannt. Schlägt die Anstechschraube am Reglerverschluss an, übt sie über das Anlageelement und die Druckfeder 16 eine erhöhte Kraft auf eine von einem Membranhalter 32 gehaltene Membranscheibe 15 auf. Der Membranhalter 32 drückt nach innen gegen einen Reglerteller 21, der den Druckregulierraum 13 nach oben hin begrenzt. Der Reglerteller überträgt den Druck auf ein Ventilelement aus Ventilstößel 18 und Ventilstößelkopf 14, der sich darauf hin in Axialrichtung von der Dichtung 17 nach unten wegbewegt. Dadurch kann Gas über einen durchgehenden Kanal 39 aus dem Druckraum 33 in den Druckregulierraum 13 gelangen.

Der Druckregulierraum 13 wird, wie erwähnt, nach oben hin vom Reglerteller 21 und im Übrigen vom Metallkern 41 und der Ventildichtung 14, 17 begrenzt. Um den Metallkern herum erstreckt sich das Innengehäuse 4, das seinerseits vom Ventilhalter 1 gehalten wird. Der Druckregulierraum 13 ist über seitliche durchgehende, fluchtende Öffnungen sowohl im Metallkern 41 als auch im Innengehäuse 4 und im Ventilhalter 1 mit dem Innenraum des Flüssigkeitsbehälters 11 verbunden. Um zu verhindern, dass bei ungünstigen Druckverhältnissen Gas oder Flüssigkeit aus dem Hauptraum des Flüssigkeitsgebindes in den Druckregulierraum 13 eindringen kann, ist die seitliche Öffnung im Ventilhalter 1 als Rückschlagventil 38 ausgestaltet.

Die erfindungsgemäße Ventileinheit ist wie oben erwähnt auf einen Druck (Vorspannung der Druckfeder 16) von ca. 1,0 bis 1,5 bar eingestellt. Ist dieser Druck erreicht, wird der Ventilstößelkopf 14 durch die Druckfeder 9 gegen den Druck der Druckfeder 16 geschlossen. Liegt der Behälterinnendruck bei über 1,0 bis 1,5 bar, bleibt das Rückschlagventil 38 geschlossen. Fällt der Behälterinnendruck auf unter diesen Wert, öffnet sich das Ventil, und es fließt Gas, z.B. CO₂, bis zum Druckausgleich nach.

In den **Figuren 6 bis 8** sind die Einzelheiten einer spezifischen Ventileinheit gemäß Figur 2 mit Sicherheitsventil gezeigt; das mit dem Patronen- und Ventilhalter 1 verbundene Patronenschutzgehäuse 3 ist nur teilweise zu sehen. Mit Bezugszeichen 6 ist die Verbindung zwischen den beiden Teilen gekennzeichnet; diese kann beliebig ausgestaltet sein, z.B. als Schraubgewinde.

Die Ventileinheit besitzt in ihrem oberen Bereich außenseitig Mittel 7, mit denen der Patronen- und Ventilhalter 1 dichtend und festsitzend in der Öffnung des Flüssigkeitsbehälters gehalten werden kann. Im übrigen ist der Patronen- und Ventilhalter vorzugsweise im wesentlichen als durchgehendes Rohr mit kreisförmigem Querschnitt ausgestaltet, das eine seitliche Öffnung 20 aufweist, die mit einer Öffnung 19 des Innengehäuses 4 kommunizieren kann. Das Innengehäuse 4 ist gegenüber dem Patronen- und Ventilhalter 1 über ein Gewinde sowohl drehbar als auch in Axialrichtung verschiebbar befestigt. In seiner Ausgangsstellung, in der eine im Patronenschutzgehäuse befindliche Patrone noch nicht angestochen ist (siehe auch Figur 7), befindet es sich in einer solchen Stellung, dass die Öffnung 19 nicht mit der Öffnung 20 des Patronen- und Ventilhalters 1 in Verbindung steht. Dadurch kann vor der Inbetriebnahme keine Flüssigkeit in das Ventil eindringen. Die Befestigung des Innengehäuses 4 am Patronen- und Ventilhalter 1 ist derart, dass eine Drehbewegung gleichzeitig eine Verschiebung des Innengehäuses nach innen, in Richtung der Patronenspitze, bewirkt (siehe auch Figur 8). Mit Hilfe eines Griffs oder einer Lasche 5 auf der Außenseite der Ventileinheit lässt es sich von der Außenseite des Flüssigkeitsbehälters aus verdrehen, wobei die Anstechspitze 8, die mit Hilfe einer Anstechscheibe 29 und einem Gewindering 30 in seinem nach innen gerichteten Endbereich angeordnet ist, in Axialrichtung nach innen bewegt wird, bis sie die Patrone 2 ansticht.

Durch die Anstechspitze läuft ein Kanal, durch den Gas aus der Patrone in einen Raum 33 entweichen kann. Mit Hilfe einer Druckfeder 9 in diesem Raum wird ein Ventilstößel 14 gegen einen Ventilsitz 17 gespannt; dieses Ventil dichtet den Raum 33 gegen einen durchgehende Öffnung 19 ab, die mit einem Druckregulierraum 13 in Verbindung steht. Dieser wird seitlich vom Innengehäuse 4 begrenzt, hat aber über die Öffnung 19 eine Verbindung nach außen, die nach der Verschiebung des Innengehäuses 4 in Richtung der Patronenspitze mit der Öffnung 20 im Patronen- und Ventilhalter kommuniziert, so dass nach Anstechen der Patrone eine Verbindung des Druckregulierraums 13 mit dem Hauptraum des Flüssigkeitsbehälters besteht.

Der Druckregulierraum wird auf seiner der Ventileinheit 14, 17 gegenüberliegenden Seite, also nach außen hin, von einer Membranscheibe 15 begrenzt, die dichtend am Innengehäuse gehalten wird. Mittig wird sie von einem Membranhalter 32 gehalten, über den sie mittels einer von einem Reglerverschluss 35 gehaltenen Druckfeder 16 vorgespannt wird. Der Membranhalter 32 drückt nach innen gegen einen Reglerteller 21, der den Druck auf einen Ventilstößel 18 überträgt, die in einer Reglerhülse 31 angeordnet ist. Der Kolben 18 überträgt den Druck auf den Kopf 14 des Ventilstößels. Sinkt der Druck im Flüssigkeitsbehälter und damit im Druckregulierraum unter einen über die Druckfeder 16 einstellbaren Wert, dann sinkt die Gegenspannung, die die Membranscheibe in Richtung der Druckfeder 16 drückt, auf einen Wert, jenseits dessen der von der Druckfeder 16 ausgeübte Druck so hoch wird, dass der Kolben 18 den Kopf des Ventilstößels nach unten drückt und Gas aus dem Raum 33 entweichen kann, bis sich im Druckregulierraum 13 wieder ein Druck aufgebaut hat, der die Membranscheibe ausreichend weit gegen die Druckfeder 16 drückt, dass der Kolben 18 in seine Ausgangsstellung zurückkehrt.

Aus sicherheitstechnischen Erwägungen ist es bevorzugt, dass sich das Innengehäuse nach dem Anstechen der Patrone nicht mehr in die Ausgangsposition zurückbewegen lässt. Dies lässt sich dadurch erreichen, dass man im Innengehäuse einen gefederten Bolzen vorsieht, der in der Endlage in eine Bohrung im Ventilhalter 1 einrastet.

Allen Ausführungsformen der Erfindung ist gemeinsam, dass ein Sicherheitssystem vorgesehen sein kann, das verhindert, dass der Druck im Druckregulierraum 13, z.B. aufgrund einer Fehlfunktion des Reduzierventils, über einen vorbestimmten Wert steigen kann. Hierfür befindet sich im Membranhalter 32 eine Bohrung 52, die sich innerhalb des Innenraums der Druckfeder 16 erstreckt. Der Membranhalter 32 besitzt fluchtend zum rohrförmigen, gebohrten Innenraum 52 eine Öffnung, die über geringdimensionierte Querbohrungen 25, die zwischen dem Membranhalter und dem Reglerteller 21 angeordnet oder als Ausnehmungen im Membranhalter gestaltet sind, mit dem Druckregulierraum 13 in Verbindung steht. In der Seitenwand des Membranhalters 32 sind nahe seinem äußeren Ende kleine Öffnungen 24 angebracht. Ein Überdruckschlauchstück 23 ist über dieses Ende bis über die Öffnungen geschoben und dichtet diese bei den vorgesehenen Arbeitsdrücken ab. Steigt der Druck im Druckregulierraum 13 zu stark an, steigt der Gasdruck auch im Innenraum der Hülse; das Gas drückt gegen die Wandung des Kunststoffröhrchens und bewirkt, dass sich ein Schlitz zwischen Hülse und Röhrchen bildet, durch den das Gas in die im Regulierverschluss 35 gebildete Federkammer der Feder 16 entweichen kann. Von dort gelangt sie über Bohrungen im Regulierverschluss 35 aus diesem heraus. Bei Ausgestaltungen, in denen die Ventileinheit über zusätzliche Mittel wie den Belüftungsventilstopfen 36 im Deckel des Flüssigkeitsbehälters befestigt ist, müssen diese Mittel dann natürlich mit Bohrungen oder Kanälen ausgestattet sein, die ein Ablassen des Überdrucks aus der erfindungsgemäßen Ventileinheit ermöglichen. Solche Belüftungsbohrungen sind in den beigefügten Figuren mit 43 bezeichnet.

In der zweiten Ausführungsform der Erfindung, wie sie z.B. in Fig. 2 dargestellt ist, kann auch ein unerwünschter Überdruck im Innenraum des Flüssigkeitsbehälters mit diesem Sicherheitssystem abgelassen werden. In Ausgestaltungen mit einem Rückschlagventil zwischen dem Druckregulierraum 13 und dem Hauptraum des Flüssigkeitsbehälters kann ein solcher Überdruck im Behälter selbst gar nicht erst entstehen.

Zusätzlich kann ein zweites Sicherheitssystem zur Vorbeugung gegen das Enstehen von zu hohem Druck bei Dichtungsproblemen an der Anstechspitze 8, z.B. im Bereich des Gewindes 30, vorgesehen sein. Ein solches System ist in Fig. 5 dargestellt. In der Ausgestaltung dieser Figur würde Gas, das über das Gewinde 30 austritt, in den Raum zwischen Gaspatrone und Patronenschutzgehäuse 3 gelangen. Ein Sicherheitskanal 40 im Innenbehälter 4 und ggf. Bohrungen 43 im Drehdeckel 42 leiten einen entsprechend sich möglicherweise aufbauenden Druck nach außen. In anderen Ausgestaltungen, beispielsweise der Ventileinheit gemäß den Figuren 2, 3 und 6 bis 8, müssten entsprechende Kanäle vorgesehen sein, im Falle dieser Ausgestaltung beispielsweise im Patronenschutzgehäuse 3, im Ventilhalter 1 und ggf. im Innengehäuse 4 des Ventilhalters. Durch das zusätzliche Sicherheitssystem kann kein erhöhter Druck im Flüssigkeitsbehälter entstehen.

Das erfindungsgemäße Ventil kann beispielsweise bei folgenden Drücken betrieben werden: Anfangsdruck in der Gaspatrone: ca. 60 Bar. Druck im Druckregulierungsraum: 1 bis 3 Bar; Auslösung des Sicherheitsventils bei mehr als 3 Bar Überdruck.

Die Erfindung betrifft daher unter anderem:
A. Eine Ventileinheit (26) mit
   - einem Patronen- und Ventilhalter (1), der Mittel (6) zum Verbinden mit einem Patronenschutzgehäuse (3), Mittel (7; 36,49) zur dichtenden Befestigung in einer dafür vorgesehene Öffnung (10) in einem Flüssigkeitsbehälter (11) sowie eine seitliche, durchgehende Öffnung (20) aufweist,
   - einem Innengehäuse (4), das im Patronen- und Ventilhalter (1) gelagert ist,
   wobei sich im Innengehäuse (4) an dessen dem Patronenschutzgehäuse (3) zugewandten Ende
   - eine Anstechspitze (8) und
   - eine Druckminderventileinheit (13, 14, 15, 16 17, 18) befindet, wobei die Druckminderventileinheit einen
   - Druckregulierraum (13) aufweist,
   wobei der Druckregulierraum (13) über eine durchgehende Öffnung (19) im Innengehäuse (4) und die seitliche, durchgehende Öffnung (20) im Patronen- und Ventilhalter (1) eine durch ein Rückschlagventil geschützte oder absperrbare Verbindung mit dem Inneren des Flüssigkeitsbehälters (11) besitzt.
B. Eine Ventileinheit wie unter A. definiert, dadurch gekennzeichnet, dass das Innengehäuse (4) einen Metallkern (41) mit einem Gewinde (30) aufweist, in den eine im Patronenschutzgehäuse (3) vorhandene Gaspatrone (2) so weit eingeschraubt werden kann, dass die Anstechspitze (8) die Gaspatrone ansticht.
C. Eine Ventileinheit wie unter B. definiert, worin der Druckregulierraum (13) in Axialrichtung gesehen begrenzt wird:
   - in Richtung des Patronenschutzgehäuses (3) von einem Ventilstößelkopf (14), dessen Oberseite unter Ausbildung eines Ventils mit einer ringförmigen Dichtfläche (17) zum Dichten des Druckregulierraums (13) gegen den Druck zusammenwirkt, der in der Anstechspitze herrscht, sowie von der Oberseite des Metallkerns 41,
   - auf der gegenüberliegenden Seite von einer Membran (15), die durch eine Feder (16) gegen den Druckregulierraum (13) vorgespannt ist.
D. Eine Ventileinheit wie unter C. definiert, bei der von außen ein erhöhter Druck auf die Feder (16) aufgebracht werden kann, derart, dass dann, wenn der Druck im Druckregulierraum (13) unter einen vorbestimmten Wert abgefallen ist, ein mit der Membran (15) in Verbindung stehendes Element (18) gegen das Ventil (14,17) drückt und es öffnet, bis soviel Gas in den Druckregulierraum geströmt ist, dass der Druck darin wieder über diesen Wert angestiegen ist.
E. Eine Ventileinheit wie unter D. definiert, worin der erhöhte Druck dadurch auf die Feder (16) aufgebracht wird, dass ein außenseitig befindlicher Drehdeckel (5, 42), der ein axiales Verschieben einer Anstechschraube (48) in Richtung des Patronenschutzgehäuses bewirkt, bis zu einer Stellung gedreht wird, in der die Anstechschraube direkt oder über ein Zwischenelement (35) auf die Feder (16) drückt.
F. Eine Ventileinheit (26) wie unter A. definiert, mit
   - einem Patronen- und Ventilhalter (1), der Mittel (6) zum Verbinden mit einem Patronenschutzgehäuse (3), Mittel (7) zur dichtenden Befestigung in einer dafür vorgesehene Öffnung (10) in einem Flüssigkeitsbehälter (11) sowie eine seitliche, durchgehende Öffnung (20) aufweist,
   - einem Innengehäuse (4), das drehbar im Patronen- und Ventilhalter (1) gelagert ist, derart, dass eine Drehbewegung des Innengehäuses (4) gegen den Patronen- und Ventilhalter (1) zu einer axialen Bewegung des Innengehäuses (4) in Richtung des Patronenschutzgehäuses (3) und damit ggf. der Mündung (12) einer Patrone (2) führt,
   wobei sich im Innengehäuse (4) an dessen dem Patronenschutzgehäuse (3) zugewandten Ende
   - eine Anstechspitze (8) und
   - eine Druckminderventileinheit (13, 14, 15, 16 17, 18) befindet, die jeweils fest mit dem Innengehäuse (4) verbunden sind, wobei die Druckminderventileinheit einen
   - Druckregulierraum (13) aufweist,
   wobei der Druckregulierraum (13) mit einer durchgehenden Öffnung (19) im Innengehäuse (4) in Verbindung steht, die derart angebracht ist, dass sie in der Ausgangsstellung des Patronen- und Ventilhalters (1) gegen einen geschlossenen Wandteil desselben (1') endet, während sie zumindest teilweise mit der Öffnung (20) im Patronen- und Ventilhalter in Verbindung steht, wenn das Innengehäuse (4) axial soweit bewegt wurde, dass die Anstechspitze (8) eine ggf. vorhandene Patrone angestochen hat.
G. Eine Ventileinheit wie unter F. definiert, dadurch gekennzeichnet, dass sich das Innengehäuse (4) von einem Anstechhebel (5), der an einem aus dem Flüssigkeitsbehälter nach außen weisenden Teil der Ventileinheit angebracht ist, drehen und damit axial verschieben lässt.
H. Eine Ventileinheit wie unter F. oder G. definiert, worin der Druckregulierraum (13) in Axialrichtung gesehen begrenzt wird:
   - in Richtung des Patronenschutzgehäuses von einem Ventilstößelkopf (14), dessen Oberseite unter Ausbildung eines Ventils mit einer ringförmigen Dichtfläche (17) zum Dichten des Druckregulierraums (13) gegen den Druck zusammenwirkt, der in der Anstechspitze (8) herrscht, und
   - auf der gegenüberliegenden Seite von einer Membran (15), die durch eine Feder (16) auf einen vorgegebenen Wert gegen den Druckregulierraum (13) vorgespannt ist, derart, dass dann, wenn der Druck im Druckregulierraum (13) unter einen vorbestimmten Wert abgefallen ist, ein mit der Membran (15) in Verbindung stehendes Element (18) gegen das Ventil (14, 17) drückt und es öffnet, bis soviel Gas in den Druckregulierraum geströmt ist, dass der Druck darin wieder angestiegen ist.
I. Eine Ventileinheit wie unter D oder H definiert, worin der von der Membran (15) in Richtung des Patronenhalters wirkende Druck über einen Reglerteller (21) auf einen Ventilstößel (18) übertragen wird, die gegen den Ventilstößelkopf (14) drückt, wobei der Ventilstößelkopf (14) von einer zweiten Feder (9) gegen die Dichtfläche (17) vorgespannt ist.
K. Eine Ventileinheit wie unter einem beliebigen der Punkte A. bis I. definiert, weiterhin umfassend ein Sicherheitsventil 34, das so angebracht ist, dass Gas aus dem Druckregulierraum (13) ins Freie entweichen kann, wenn der Druck in diesem Raum einen vorgegebenen Wert übersteigt.
L. Eine Ventileinheit wie unter K. definiert, worin das Sicherheitsventil eine kolbenartige Verlängerung im Membranhalter (32) mit einer auf der der Membran abgewandten Stirnseite geschlossenen, zentrischen Bohrung (52), die seitlich in der Nähe dieser Stirnseite Öffnungen (24) aufweist, sowie einen flexiblen Schlauch (23) umfasst, der die kolbenartige Verlängerung des Membranhalters im Bereich der seitlichen Öffnungen abdeckt, wobei das Element über geringdimensionierte Öffnungen (25) mit dem Druckregulierraum (13) in Verbindung steht.
M. Eine Ventileinheit wie unter E definiert, worin sich der Drehdeckel (50, 42) außenseitig an einem Ventil- und Belüftungsstopfen (36) befindet, der dichtend (49) in der Öffnung (10) des Flüssigkeitsbehälters (11) eingesetzt ist.
N. Eine Ventileinheit wie unter M definiert, worin der Ventil- und Belüftungsstopfen weiterhin Mittel zum Ablassen von Überdruck, vorzugsweise in Gestalt von einer oder mehreren Entlüftungsbohrungen (43) aufweist.
O. Eine Ventileinheit wie unter F., G. oder H definiert, worin Mittel zum Arretieren des Innengehäuses (4) in der Stellung vorgesehen sind, in der es axial soweit in Richtung des Patronenschutzgehäuses verschoben wurde, dass die Anstechspitze (8) eine ggf. vorhandene Patrone angestochen hat.
P. Eine Ventileinheit wie unter einem beliebigen der Punkte A. bis O. definiert, umfassend ein Gewinde (6) zum Verbinden der Ventileinheit (1) mit einem Patronenschutzgehäuse (3).
Q. Eine Ventileinheit wie unter einem beliebigen der Punkte A. bis P. definiert, weiterhin umfassend ein Patronenschutzgehäuse (3).
R. Eine Ventileinheit wie unter einem beliebigen der Punkte A. bis O. und Q. definiert, worin die Ventileinheit (1) kraftschlüssig oder über Einrastkrallen (44) mit einem Patronenschutzgehäuse (3) verbunden werden kann oder mit diesem verbunden ist
S. Eine Ventileinheit wie unter einem beliebigen der Punkte E oder G definiert, weiterhin umfassend eine durch die Kraft einer Hand irreversibel zerstörbare Sicherung, die den Anstechhebel (5) oder die Anstechlasche (50) so überspannt, dass diese(r) nicht ohne Zerstörung der Sicherung betätigt werden kann.

### Bezugszeichenliste

- 1: Ventilhalter
- 2: Patrone
- 3: Patronenschutzgehäuse
- 4: Innengehäuse
- 5: Anstechhebel
- 6: Schraubgewinde Ventilhalter/Patronenhalter
- 7: Äußeres Dichtungsmittel
- 8: Anstechspitze
- 9: Druckfeder
- 10: Öffnung im Behälterdeckel
- 11: Flüssigkeitsbehälter
- 13: Druckregulierraum
- 14: Ventilstößelkopf
- 15: Membranscheibe
- 16: Druckfeder
- 17: Dichtfläche für Ventilstößel
- 17.1: Dichtung
- 18: Ventilstößel
- 19: seitliche Öffnung im Innengehäuse
- 20: seitliche Öffnung im Ventilhalter
- 21: Reglerteller
- 23: Überdruckschlauch
- 24: Öffnungen
- 25: Querbohrung
- 26: Ventileinheit
- 27: Zapfhahn
- 28: Steigrohr
- 29: Anstechscheibe
- 30: Gewindering
- 31: Reglerhülse
- 32: Membranhalter
- 33: Druckraum
- 34: Sicherheitsventil
- 35: Reglerverschluss
- 36: Ventilstopfen
- 37: Schraubgewinde
- 38: Rückschlagventil
- 39: durchgehender Kanal
- 40: Sicherheitskanal
- 41: Metallkern
- 42: Drehdeckel
- 43: Entlüftungsbohrung
- 44: Einrastkrallen
- 48: Anstechschraube
- 49: Dichtungsring
- 50: Anstechlasche
- 51: Anlageelement
- 52: Bohrung

## Patentansprüche

**1.** Ventileinheit für ein System zum Zapfen eines Getränks aus einem Flüssigkeitsgebinde, die mit einer in einem Patronenschutzgehäuse befindlichen Druckgaspatrone zur Erhöhung des Drucks im Inneren des Flüssigkeitsgebindes zusammenwirkt, wobei die Ventileinheit folgendes umfasst:
(a) eine Anstechspitze,
(b) ein Dichtungsventil,
(c) einen Druckregulierraum sowie
(d) einen durch das Dichtungsventil gegen den Druckregulierraum abdichtbaren Druckraum, in den nach dem Anstechen der Druckgaspatrone aus der Patrone austretendes Gas vordringt,
(e) ein Rückschlagventil, das verhindert, dass Flüssigkeit aus dem Hauptraum des Gebindes in den Druckregulierraum eindringt,
wobei die Ventileinheit derart ausgebildet ist, dass ihre Aktivierung gleichzeitig folgendes bewirken kann:
(i) das Anstechen der Druckgaspatrone und
(ii) die Ausbalancierung des Drucks zwischen dem Druckraum und dem Druckregulierraum mit Hilfe eines Federsystems derart, dass im Innern der Ventileinheit ein Druck von ca. 1,0 bis 1,5 bar eingestellt wird.

**2.** Ventileinheit nach Anspruch 1, weiterhin umfassend ein Sicherheitsventil, das so angebracht ist, dass Gas aus dem Druckregulierraum ins Freie entweichen kann, wenn der Druck in diesem Raum einen vorgegebenen Wert übersteigt.

**3.** Verwendung der Ventileinheit nach Anspruch 1 oder 2 in einem Flüssigkeitsgebinde, **dadurch gekennzeichnet, dass** die Ventileinheit im Deckel angeordnet ist und ihre Aktivierung erst ab dem Zeitpunkt bewirkt werden soll, ab dem eine Kompensation des Druckabfalls im Flüssigkeitsbehälter nötig ist.

**3.** Verwendung nach Anspruch 2, **dadurch gekennzeichnet, dass** die Ventileinheit exzentrisch im Deckel angeordnet ist.

**4.** Verwendung nach Anspruch 2 oder 3, **dadurch gekennzeichnet, dass** das Flüssigkeitsgebinde ein Getränkebehälter für Bier ist und die Druckgasquelle eine CO₂-Patrone ist.

**5.** Verwendung nach einem der Ansprüche 2 bis 4, **dadurch gekennzeichnet, dass** das Flüssigkeitsgebinde weiterhin einen Zapfhahn aufweist.

**6.** Verwendung nach Anspruch 5, **dadurch gekennzeichnet, dass** der Zapfhahn ein Kompensationssystem aufweist, mit dem der Zapfdruck gegenüber dem Innendruck reduziert und feinreguliert werden kann.
